# EUROPÄISCHE PATENTSCHRIFT

(11) **EP 4 015 137 B1**
(45) Veröffentlichungstag und Bekanntmachung des Hinweises auf die Patenterteilung: **09.10.2024**
(21) Anmeldenummer: 21213179.1
(22) Anmeldetag: 08.12.2021
(51) Int. Cl.: B23K 31/12, B23K 9/02, B23K 9/095, B23K 9/235, B23K 26/044, G05B 19/402, B23K 101/00

(54) **VERFAHREN ZUR HERSTELLUNG GESCHWEISSTER BAUTEILE**
METHOD FOR MANUFACTURING WELDED COMPONENTS
PROCÉDÉ DE FABRICATION DE COMPOSANTS SOUDÉS

(30) Priorität: 16.12.2020 DE 102020133791
(43) Veröffentlichungstag der Anmeldung: 22.06.2022
(73) Patentinhaber: Benteler Automobiltechnik GmbH, 33102 Paderborn (DE)
(72) Erfinder: Schultz, Erik, 33100 Paderborn (DE); Reineke, Elmar, 33100 Paderborn (DE)
(74) Vertreter: Ksoll, Peter

(56) Entgegenhaltungen:
- CN-A- 102 114 575
- US-A1- 2012 072 021

## Beschreibung

Die Erfindung betrifft ein Verfahren zur Herstellung von geschweißten Bauteilen gemäß den Merkmalen im Oberbegriff von Anspruch 1.

Schweißen ist ein die Gestaltung bestimmendes Fertigungsverfahren für Schweißbauteile und eines der wichtigsten und am weitesten verbreiteten Fügeverfahren. Unter Schweißen versteht man das unlösbare stoffschlüssige Verbinden von Bauteilen unter Anwendung von Wärme und Druck mit oder ohne Schweißzusatzwerkstoffen. Beim Verbindungsschweißen werden die Teile durch Schweißnähte am Schweißstoß zum Schweißbauteil zusammengefügt. Mehrere Schweißteile ergeben eine Schweißgruppe und mehrere Schweißgruppen eine Schweißkonstruktion.

Durch Schweißen werden die Bauteile bzw. Bauteilabschnitte so miteinander verbunden, dass diese die an sie gestellten Anforderungen über eine erwartete Lebensdauer erfüllen können. Dazu müssen die Schweißverbindungen anforderungsgerechte Qualitätskriterien und Gütemerkmale erfüllen. Diese sind eng mit den an die jeweiligen Bauteilanforderungen im Einsatz gebunden. Ausreichende Qualität ist dann zu erwarten, wenn auftretende Unregelmäßigkeiten der Schweißnaht, die während oder nach dem Schweißen entstehen, für die Nutzung des geschweißten Bauteils toleriert werden können. Sind sie nicht mehr akzeptabel, werden die Unregelmäßigkeiten als Verbindungsfehler bezeichnet und die geschweißten Bauteile sind Ausschuss.

Als Schweißstoß wird der Bereich bezeichnet, in dem die Schweißteile miteinander vereinigt werden. Es gibt verschiedene Stoßarten, die sich im Wesentlichen durch die konstruktive Anordnung der Werkstücke bzw. deren Endflächen unterscheiden. Je nach Stoßart werden verschiedene Schweißnahtarten angewendet. Man unterscheidet Stumpfnähte und Kehlnähte.

Beim Stumpfstoß liegen die Werkstücke bzw. die zu verbindenden Bauteilabschnitte in einer Ebene. Diese können an ihren Enden verschiedene Formen aufweisen und so die Nahtform bestimmen. Bei einer I-Naht sind die Schweißnaht und die Enden der Bauteilabschnitte gerade. Bei einer V-Naht sind die Endflächen der Bauteilabschnitte angeschrägt. Die V-Naht läuft zur Wurzel hin spitz zu.

An Stumpfstößen hat die Schweißnahtlage einen entscheidenden Einfluss auf die funktionsrelevanten Parameter der Schweißnaht wie z. B. den Einbrand. Als Einbrandtiefe bezeichnet man den Abstand der Oberfläche des durch Schweißen geschmolzenen Grundwerkstoffs und der ursprünglichen Oberfläche des Grundwerkstoffs. Ist die Schweißnaht außermittig platziert, führt dies mit sehr hoher Wahrscheinlichkeit zu Schweißnähten mit geringem Einbrand. Damit kann das Schweißergebnis untauglich sein. Eine Bewertung der Schweißnahtparameter, wie der Einbrand oder die Flankeneinbrandlänge, erfolgt in der Regel nach der Fertigstellung eines Fertigungsloses, insbesondere über das Anfertigen von Schliffen und die Beurteilung der Schliffbilder. Tritt ein systematischer Fehler in Bezug auf die Schweißnahtlage auf, lässt sich dies dann erst nach Auswertung der Schliffe feststellen mit der Folge, dass das komplette Fertigungslos die Qualitätskriterien nicht erfüllt und Ausschuss wird. Die derzeit gängige Praxis zur Beurteilung der Schweißbauteile mit der Anfertigung von Schliffbildern bedarf eines vergleichsweise hohen Aufwandes und ist zeitintensiv.

Die Überprüfung der Schweißnahtqualität ist sehr wichtig. Verschiedene zerstörende oder zerstörungsfreie Prüfverfahren sind bekannt. Neben der optischen Prüfung gibt es verschiedene Methoden der Oberflächenprüfung von Schweißnähten wie z. B. die Magnetpulverprüfung, die Farbeindringprüfung, die Ultraschall- oder Durchstrahlungsprüfung (Röntgen) und die Prüfung mit einem Bildverarbeitungssystem oder einem Laser-Profilsensor.

Die DE 10 2008 058 187 A1 beschreibt ein Verfahren und eine Vorrichtung zur zerstörungsfreien Qualitätsbestimmung einer Schweißnaht.

Durch die DE 43 12 241 A1 zählt ein Verfahren zur Nahtvermessung zum Stand der Technik.

Weiterhin ist durch die EP 1 245 923 A2 ein Verfahren und eine Vorrichtung zur Kantenverfolgung und Kantenprüfung bei Schweißverbindungen bekannt.

Aus der CN 102114575 A, welche die Grundlage für den Oberbegriff des Anspruchs 1 bildet, geht ein durch Reibrührschweißen gefügter Strukturkörper aus einer Aluminiumlegierung hervor. Auf der Oberfläche des Strukturkörpers werden Rippen oder Rillen erzeugt. Beim Reibrührschweißen werden die Rippen oder Rillen als Referenz verwendet, so dass die Rührnadel auf die Mitte der Schweißnaht in Echtzeit zentriert werden kann.

Zum technologischen Hintergrund zählt die US 2012/072,021 A1, welche ein Verfahren und ein System zum hochpräzisen Positionieren mindestens eines Objekts in eine Endlage im Raum mittels eines Industrieroboters beschreibt.

Die übliche optische bzw. visuelle Vermessung der Oberfläche einer Schweißraupe und die Beurteilung ihrer Gleichmäßigkeit lässt jedoch nur unzureichende Rückschlüsse über die Einschweißtiefe zu. Eine zerstörende Prüfung wie die Auswertung von Schliffbildern ist aufwändig und zeitintensiv. Ähnliche Feststellungen gelten für eine Magnetpulverprüfung, Ultraschallprüfung oder auch eine Eindringprüfung. Die Prüfung mit Bildverarbeitungssystemen oder Laser-Profilsensoren erfordert aufwändige Apparaturen.

Der Erfindung liegt ausgehend vom Stand der Technik die Aufgabe zugrunde, ein Verfahren zur Herstellung von geschweißten Bauteilen aufzuzeigen mit einem verbesserten Schweißergebnis und einem rationellen in den Fertigungsablauf zu integrierenden Positionskontrolle der Schweißnaht.

Die Lösung dieser Aufgabe besteht nach der Erfindung in einem Verfahren gemäß Anspruch 1.

Vorteilhafte Weiterbildungen des erfindungsgemäßen Verfahrens sind Gegenstand der abhängigen Ansprüche.

Bei der Herstellung eines geschweißten Bauteils werden ein erster Bauteilabschnitt mit einer ersten Beschnittkante und ein zweiter Bauteilabschnitt mit einer zweiten Beschnittkante erzeugt. Dies erfolgt durch Zuschneiden von schweißbaren Blechen, insbesondere von Stahlblechen. Zum Herstellen der Schweißverbindung werden die erste Beschnittkante und die zweite Beschnittkante zueinander positioniert und der erste Bauteilabschnitt und der zweite Bauteilabschnitt mittels einer Schweißnaht stoffschlüssig gefügt.

Erfindungsgemäß werden vor dem Herstellen der Schweißnaht parallel zur ersten Beschnittkante und/oder parallel zur zweiten Beschnittkante mehrere Marker mit Abstand zur Beschnittkante erzeugt. Zur Herstellung einer stoffschlüssigen Verbindung zwischen den Bauteilabschnitten werden diese über eine Schweißnaht verbunden. Während oder nach dem Herstellen der Schweißnaht erfolgt eine Positionskontrolle der Schweißnaht durch eine Bewertung der Lage der Marker relativ zur Schweißnaht. Auf diese Weise kann bereits während, insbesondere aber auch kurz nach dem Herstellen der Schweißnaht, eine verlässliche Beurteilung der Schweißnahtlage und damit eine wesentliche Aussage über die Qualität der Schweißnaht getroffen werden. Dies erfolgt unmittelbar bzw. kurz nach dem Herstellen der Schweißnaht, so dass die fehlerhafte Ausführung der Schweißnaht zeitnah erkannt wird. Auf diese Weist ist es möglich, direkt in den Fertigungsprozess einzugreifen und korrigierende Maßnahmen vorzunehmen. Die Erfindung ermöglicht die Beurteilung der Schweißparameter und die Bewertung der Schweißnaht bzw. der geschweißten Bauteile zeitnah im Fertigungsprozess, ohne eine zerstörende Prüfung. Die hergestellten Bauteile sind qualitativ hochwertig. Der Ausschuss des Fertigungsprozesses kann reduziert werden.

Insbesondere handelt es sich um optische Marker, die visuell erkennbar und eine Sichtkontrolle am Ende oder während der Herstellung der Schweißnaht ermöglichen.

Die Erfindung schafft eine verbesserte visuelle Kontrolle bzw. Inspektion der Schweißnaht und damit der gefertigten Schweißbauteile. Durch die Begutachtung und Auswertung der Schweißnahtlage in Relation zu den Markern ist eine verlässliche Überprüfung des Verlaufs der Schweißnaht möglich, insbesondere der Schweißnahtmitte und eines möglichen Versatzes, wodurch unmittelbar ein Rückschluss auf die Einschweißtiefe bzw. die Einbrandtiefe möglich ist. Dies erfolgt ohne eine aufwändige Messstation und in vergleichsweise kurzer Zeit. Durch die äußere Bewertung der Schweißnaht und der Schweißnahtlage können qualitative Rückschlüsse auf die Güte der Schweißnahtverbindung gezogen werden, und zwar durch eine bloße visuelle Kontrolle bzw. Prüfung.

Der Ablauf bei der Fertigung bzw. Herstellung von geschweißten Bauteilen, insbesondere bei Bauteilen, bei denen die Bauteilabschnitte über Stumpfstöße gefügt werden, bietet die Möglichkeit, erfindungsgemäß beim Zuschneiden der zu fügenden Blechzuschnitte entlang der Beschnittkante ein zusätzliches Merkmal in Form eines Markers parallel zur Beschnittkante einzubringen. Die Lage dieses Markers relativ zur Schweißnaht ermöglicht eine Aussage über die Position der Schweißnaht im Stoß, ohne eine zerstörende Prüfung vorzunehmen. So kann bereits vor dem Anfertigen von Schliffbildern eine Aussage über die Schweißnaht getroffen werden und gegebenenfalls eine Korrektur der Schweißparameter vorgenommen werden.

Eine für die Praxis vorteilhafte Ausführung eines Markers sieht vor, diese durch eine Vertiefung, insbesondere eine Einprägung in der Oberfläche eines Bauteilabschnittes zu bilden. Die Einprägung kann wenige Zehntel mm tief sein. Derartige Vertiefungen bzw. Einprägungen haben vorzugsweise eine gerundete Kontur, so dass Kerbwirkungen infolge der Marker im Bauteil nicht bzw. nicht nachteilig auftreten.

Grundsätzlich kann es ausreichend sein, optische Marker parallel zu nur einer Beschnittkante vorzusehen. Besonders zweckmäßig werden entlang der ersten Beschnittkante und entlang der zweiten Beschnittkante parallel Marker gesetzt. Die Marker sind in einem definierten Abstand von der Beschnittkante angeordnet. Der Abstand wird senkrecht zur Längsachse der Beschnittkante an der Oberseite des Bauteilabschnitts gemessen. Der Abstand der Marker in einer Reihe entlang einer Beschnittkante ist vorzugsweise gleich bemessen. Auch der Abstand der einzelnen Marker zur benachbarten Beschnittkante ist gleich. Die Marker in einer Reihe entlang der ersten Beschnittkante und die Marker in einer Reihe entlang der zweiten Beschnittkante sind symmetrisch zur Fügelinie bzw. der Schweißfuge ausgeführt.

Eine einfache Vorgehensweise sieht vor, dass die Schweißnaht unmittelbar im Fertigungsprozess optisch beurteilt wird. Dies kann visuell, gegebenenfalls unter Nutzung eines Messwerkzeugs, vorgenommen werden. Die Begutachtung der Schweißnaht bzw. der geschweißten Bauteile erfolgt vorzugsweise im Nachgang bei weitgehend abgekühltem Material. In der Serienfertigung von Schweißbauteilen können hierfür geeignete Lehren zur Prüfung genutzt werden. Die Lehren sind bauteilspezifisch auf die zu begutachtenden Bauteile und Schweißnähte ausgelegt und erleichtern bzw. verbessern eine optische bzw. visuelle manuelle Kontrolle in kurzer Zeit.

Grundsätzlich ist es selbstverständlich auch möglich, eine optoelektronische Unterstützung bzw. Erfassung und Positionskontrolle durchzuführen.

Im Rahmen der Erfindung ist es auch möglich, die aus der Positionskontrolle der Schweißnaht gewonnenen Informationen zu einer Nahtführung der Schweißnaht während des Schweißprozesses zu nutzen. Bei einem solchen System werden die Marker optisch erfasst und ständig mit Sollvorgaben verglichen, um die gewünschte Schweißqualität auch bei hohen Stückzahlen sicherzustellen. In dieses System können weitere Beurteilungsmerkmale wie Lage, Größe und Form der Schweißnaht sowie Geschwindigkeit beim Schweißprozess einfließen.

Die Erfindung ermöglicht auf einfache Weise Fehler zu entdecken und eine zuverlässige Schweißnahtüberwachung. Bei auftretenden Fehlern oder Toleranzen kann entsprechend kurzfristig reagiert werden und die Abweichungen rechtzeitig berücksichtigt bzw. korrigiert werden.

Erfindungsgemäß werden die Marker beim Herstellen der Beschnittkanten erzeugt. Die Marker werden unmittelbar parallel mit dem Beschnittvorgang in die Bauteiloberfläche entlang der Beschnittkante eines Bauteilabschnitts hergestellt.

Der Zeitpunkt der Herstellung der Marker ist abhängig von der Geometrie des bzw. der herzustellenden geschweißten Bauteile und dem Schnittkantenverlauf. Der Zeitpunkt der Herstellung der Marker wird vorteilhaft in den Fertigungsablauf der geschweißten Bauteile integriert.

Das geschweißte Bauteil oder ein Bauteilkörper dieses Bauteils kann aus einem Metallblech gebildet sein. Ein solches Bauteil ist beispielsweise ein einstückiger Rohrkörper, bei dem ein Blechzuschnitt aus Stahl zu einem Rohr geformt und entlang der aneinander mit einem Stumpfstoß aneinander positionierten Beschnittkanten verschweißt wird.

Das Bauteil oder ein Bauteilkörper des Bauteils können auch aus mehreren zugeschnittenen und gegebenenfalls vorgeformten Metallblechen gebildet sein, beispielsweise zwei Halbschalen.

Das erfindungsgemäß Verfahren zur Herstellung von geschweißten Bauteilen ist insbesondere vorteilhaft geeignet für die Herstellung von Kraftfahrzeugbauteilen wie längsnahtgeschweißte Rohre, Querträger oder Torsionsprofile ebenso wie aus Blechzuschnitten gebildete und/oder zusammengesetzte Lenkerbauteile, Kraftfahrzeugsäulen oder Schweller.

Die Erfindung ist nachfolgend anhand von Zeichnungen näher beschrieben. Es zeigen:
- Figur 1: technisch schematisiert die Herstellung von Beschnittkanten an zwei Bauteilabschnitten;
- Figur 2: die beiden zueinander positionierten Bauteilabschnitte vor dem Schweißvorgang;
- Figur 3: die über eine Schweißnaht stoffschlüssig gefügten Bauteilabschnitte;
- Figur 4: die beiden Bauteilabschnitte mit einer ordnungsgemäß ausgeführten Schweißnaht;
- Figur 5: die beiden Bauteilabschnitte mit einer fehlerhaft ausgeführten Schweißnaht;
- Figur 6: die beiden Bauteilabschnitte und die Schweißnaht entsprechend der Darstellung von Figur 4 in einer Draufsicht;
- Figur 7: die beiden Bauteilabschnitte und die Schweißnaht entsprechend der Darstellung der Figur 5 in einer Draufsicht;
- Figur 8: eine perspektivische Darstellung eines erfindungsgemäß hergestellten geschweißten Bauteils innerhalb einer Schweißbaugruppe und
- Figur 9: einen vertikalen Querschnitt durch das Torsionsprofil der Darstellung in der Figur 8.

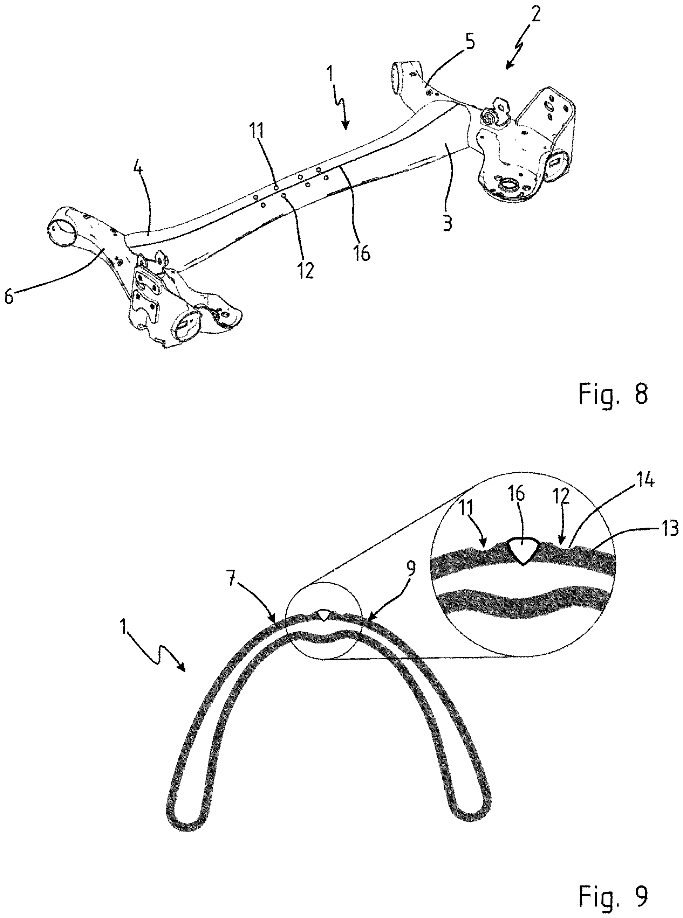

Ein erfindungsgemäß hergestelltes geschweißtes Bauteil 1 in Form eines Torsionsprofils einer Verbundlenkerachse 2 ist in der Figur 8 dargestellt. An jedem Ende 3, 4 des Torsionsprofils 1 ist ein Längslenker 5, 6 angeschweißt. Einen vertikalen Querschnitt durch das Torsionsprofil 1 zeigt die Figur 9.

Zur Herstellung eines geschweißten Bauteils 1, wie in den Figuren 8 und 9 dargestellt, wird ein Blechzuschnitt bereitgestellt. Der Blechzuschnitt entspricht der Abwicklung des zu fertigenden Bauteils 1. Beim Zuschneiden des Blechzuschnitts wird ein erster Bauteilabschnitt 7 mit einer ersten Beschnittkante 8 und ein zweiter Bauteilabschnitt 9 mit einer zweiten Beschnittkante 10 erzeugt.

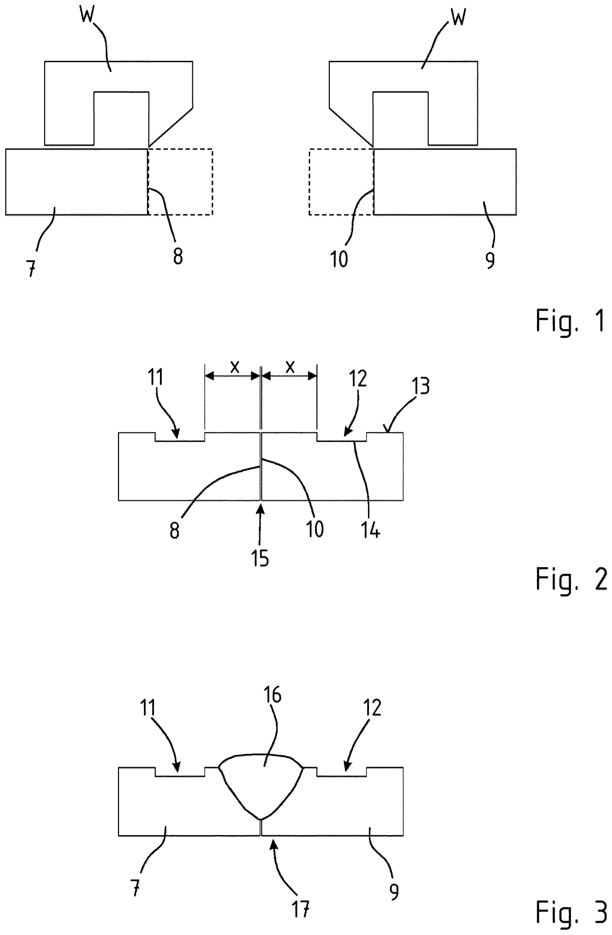

Die Herstellung des Blechzuschnitts ist schematisch anhand der Figur 1 verdeutlicht. Beim Zuschneiden des Blechzuschnittes werden parallel zur ersten Beschnittkante 8 und parallel zur zweiten Beschnittkante 10 jeweils mehrere optische Marker 11, 12 mit einem Abstand x zur Beschnittkante 8 bzw. 10 in der Oberfläche 13 des Blechzuschnitts bzw. des ersten Bauteilabschnitts 7 und des zweiten Bauteilabschnitts 9 hergestellt. Die Marker 11, 12 sind durch eine Vertiefung 14, insbesondere eine Einprägung in der Oberfläche 13 des jeweiligen Bauteilabschnitts 7, 9 gebildet. Ein Beschnitt- und Prägewerkzeug ist in der Figur 1 schematisch dargestellt und mit dem Bezugszeichen W versehen. Die Einprägung ist einige Zehntel mm tief. Der Abstand x wird quer zur Längsrichtung einer Beschnittkante 8, 10 in einem rechten Winkel zur Beschnittkante 8, 10 gemessen.

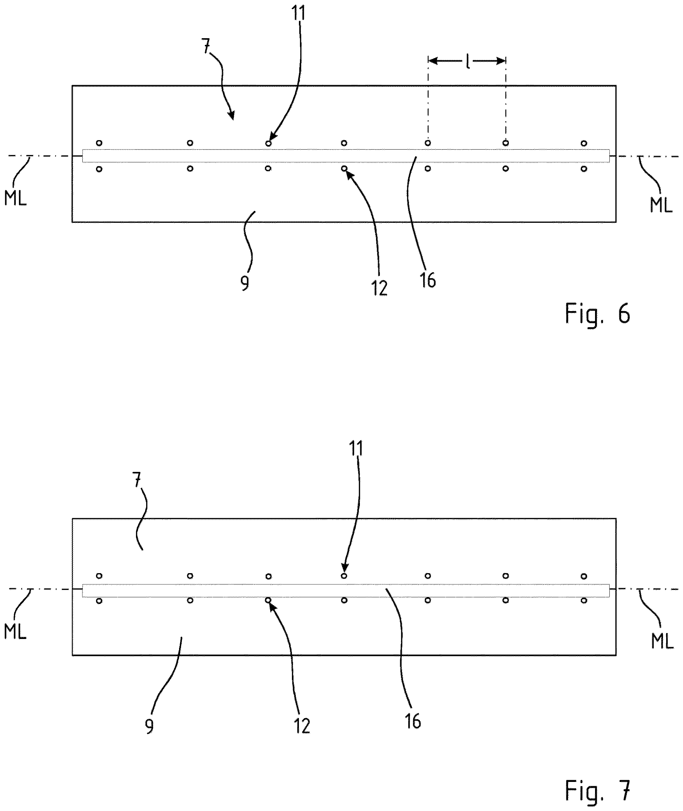

Die Figuren 6 und 7 verdeutlichen, dass in jedem ersten Bauteilabschnitt 7 und in jedem zweiten Bauteilabschnitt 9 entlang der jeweiligen Beschnittkante 8, 10 eine Vielzahl von Markern 11, 12 in einer Reihe parallel zur Beschnittkante 8, 10 gesetzt werden. Der Abstand I zwischen Markern 11, 12 einer Reihe im ersten Bauteilabschnitt 7 bzw. im zweiten Bauteilabschnitt 9 ist gleich bemessen.

Der Blechzuschnitt wird dann umgeformt und die erste Beschnittkante 8 und die zweite Beschnittkante 10 zueinander positioniert. Im Falle eines Schweißbauteils 1 mit einer im Querschnitt V-förmigen Geometrie wird der Blechzuschnitt zu einem Schlitzrohr geformt. Der erste Bauteilabschnitt 7 und der zweite Bauteilabschnitt 9 haben die gleiche Dicke d. Der erste Bauteilabschnitt 7 und der zweite Bauteilabschnitt 9 liegen in einer Ebene, so dass die erste Beschnittkante 8 und die zweite Beschnittkante 10 mit einem Stumpfstoß 15 aneinanderstoßen bzw. zueinander positioniert sind (siehe Figur 2).

Die endseitigen Beschnittkanten 8, 10 verlaufen gerade. Ein solcher Stumpfstoß 15 wird auch als I-Stoß bezeichnet. Anschließend werden der erste Bauteilabschnitt 7 und der zweite Bauteilabschnitt 9 mittels einer Schweißnaht 16 stoffschlüssig gefügt. Diese ist als V-Naht ausgeführt und verläuft in Richtung zur Unterseite 17 der Bauteilabschnitte 7, 9 gebildeten Wurzel hin spitz zu.

Die Figur 3 zeigt die miteinander stoffschlüssig über die Schweißnaht 16 gefügten Bauteilabschnitte 7, 9. Links und rechts der Schweißnaht 16 erkennt man jeweils einen optischen Marker 11, 12. Die Schweißnaht 16 verläuft mittig entlang der Schweißfuge zwischen den beiden Bauteilabschnitten 7, 9 (siehe auch Figur 6).

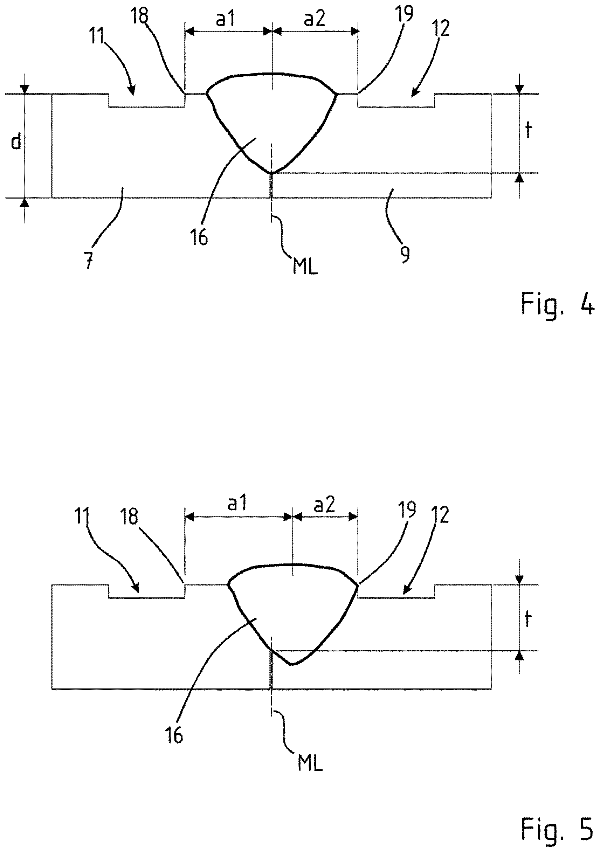

Anhand der Figuren 4 und 5 sind Qualitätsmerkmale einer Schweißnaht 16 erläutert. Die Figur 4 zeigt eine ordnungsgemäße Nahtlage mittig zwischen den Bauteilabschnitten 7, 9. Der Abstand a1 und a2 von der in Längsrichtung der Schweißnaht 16 verlaufenden Mittellinie ML in Bildebene nach links zur benachbarten oberen Kante 18 des im ersten Bauteilabschnitt 7 angeordneten Markers 11 und nach rechts zu der benachbarten oberen Kante 19 des im zweiten Bauteilabschnitt 9 vorgesehenen Markers 12 ist gleich. Die Einbrandtiefe t ist ordnungsgemäß tief. Durch die Bewertung der Lage der Marker 11, 12 relativ zur Schweißnaht 16 erfolgt eine Positionskontrolle der Schweißnaht 16, womit eine verlässliche Aussage über die Einbrandtiefe t und die Aussage der Festigkeit getroffen werden kann. Das Schweißbauteil 1 ist in Ordnung.

Eine andere Bewertung der Positionskontrolle der Schweißnaht 16 ergibt sich bei einer Situation wie in der Figur 5 und der Figur 7 dargestellt. Die Schweißnaht 16 ist außermittig gesetzt und verläuft in Bildebene nach rechts zum zweiten Bauteilabschnitt 9 hin versetzt. Der Abstand a1 zum Marker 11 im ersten Bauteilabschnitt 7 ist größer als der Abstand a2 zum Marker 12 im zweiten Bauteilabschnitt 9. Die Einbrandtiefe t ist nicht ausreichend tief. Die Schweißraupe ist versetzt und weicht von der Schweißnahtmitte ab. Durch die Bewertung der Lage der Marker 11, 12 relativ zur Schweißnaht 16 ist visuell festzustellen, dass die Schweißnaht 16 unzureichend ist und die geforderten Festigkeiten mit hoher Wahrscheinlichkeit nicht erfüllt, so dass das Bauteil der Gefahr unterliegt, die an die Lebensdauer gestellten Anforderungen nicht zu erfüllen. Daher ist das Bauteil nicht in Ordnung und als Ausschuss zu qualifizieren. Diese Bewertung erfolgt visuell, gegebenenfalls unter Zuhilfenahme einer dafür bestimmten Lehre.

Bei Feststellen einer unzulässigen Schweißnahtausführung kann kurzfristig in den Fertigungsprozess eingegriffen werden. Dies ist in kurzer Zeit möglich, bevor andere Schweißnahtprüfungen, wie eine Ultraschallprüfung oder auch die Auswertung von nachträglich angefertigten Schliffbildern erfolgt.

Am fertigen Bauteil 1, wie in den Figuren 8 und 9 zu erkennen, verlaufen die Marker 11, 12 in Abstand jeweils gemessen senkrecht zur Beschnittkante 8, 10 bzw. der in Längsrichtung verlaufenden Schweißnaht 16.

Durch die von außen sichtbaren optischen Marker 11, 12 kann auch zu einem späteren Zeitpunkt bei der Weiterverarbeitung des geschweißten Bauteils 1 eine Kontrolle der Schweißnahtausführung und damit eine Qualitätsbewertung des geschweißten Bauteils 1 durchgeführt werden.

Möglich ist es, die aus der Positionskontrolle der Schweißnaht 16 gewonnenen Informationen zu einer automatisierten Nahtführung der Schweißnaht 16 während des Schweißprozesses heranzuziehen.

### Bezugszeichen:

- 1 -: Bauteil
- 2 -: Verbundlenkerachse
- 3 -: Ende von 1
- 4 -: Ende von 1
- 5 -: Längslenker
- 6 -: Längslenker
- 7 -: erster Bauteilabschnitt
- 8 -: erste Beschnittkante
- 9 -: zweiter Bauteilabschnitt
- 10 -: zweite Beschnittkante
- 11 -: optischer Marker
- 12 -: optischer Marker
- 13 -: Oberfläche
- 14 -: Vertiefung
- 15 -: Stumpfstoß
- 16 -: Schweißnaht
- 17 -: Unterseite
- 18 -: obere Kante von 8
- 19 -: obere Kante von 10

- a1 -: Abstand
- a2 -: Abstand
- d -: Dicke
- I -: Abstand
- t -: Einbrandtiefe
- x -: Abstand
- ML -: Mittellinie
- W -: Beschnitt- und Prägewerkzeug

## Patentansprüche

1. Verfahren zur Herstellung geschweißter Bauteile (1), wobei ein erster Bauteilabschnitt (7) mit einer ersten Beschnittkante (8) und ein zweiter Bauteilabschnitt (9) mit einer zweiten Beschnittkante (10) erzeugt werden, wonach die erste Beschnittkante (8) und die zweite Beschnittkante (10) zueinander positioniert und der erste Bauteilabschnitt (7) und der zweite Bauteilabschnitt (9) mittels einer Schweißnaht (16) stoffschlüssig gefügt werden, **dadurch gekennzeichnet, dass** vor dem Herstellen der Schweißnaht (16) parallel zur ersten Beschnittkante (8) und/oder parallel zur zweiten Beschnittkante (10) mehrere Marker (11, 12) mit Abstand (x) zur Beschnittkante (8, 10) erzeugt werden, wobei die Marker (11, 12) beim Herstellen der Beschnittkante (8, 10) erzeugt werden und während oder nach dem Herstellen der Schweißnaht (16) eine Positionskontrolle der Schweißnaht (16) durch eine Bewertung der Lage der Marker (11, 12) relativ zur Schweißnaht (16) vorgenommen wird.

2. Verfahren nach Anspruch 1, **dadurch gekennzeichnet, dass** ein Marker (11, 12) durch eine Vertiefung (14), insbesondere eine Einprägung, in der Oberfläche (13) eines Bauteilabschnitts (7, 9) erzeugt wird.

3. Verfahren nach Anspruch 1 oder 2, **dadurch gekennzeichnet, dass** die erste Beschnittkante (8) des ersten Bauteilabschnitts (7) und die zweite Beschnittkante (10) des zweiten Bauteilabschnitts (9) mit einem Stumpfstoß (15) zueinander positioniert werden.

4. Verfahren nach einem der Ansprüche 1 bis 3, **dadurch gekennzeichnet, dass** das Bauteil (1) oder ein Bauteilkörper des Bauteils (1) aus einem Blechzuschnitt gebildet wird.

5. Verfahren nach einem der Ansprüche 1 bis 4, **dadurch gekennzeichnet, dass** das Bauteil (1) oder ein Bauteilkörper des Bauteils (1) aus mehreren Blechzuschnitten gebildet wird.

6. Verfahren nach einem der Ansprüche 1 bis 5, **dadurch gekennzeichnet, dass** aus der Positionskontrolle der Schweißnaht (16) gewonnene Informationen zu einer automatisierten Nahtführung der Schweißnaht (16) während des Schweißprozesses herangezogen werden.

## Claims

1. Method for the production of welded components (1), wherein a first component section (7) with a first trimmed edge (8) and a second component section (9) with a second trimmed edge (10) are generated, after which the first trimmed edge (8) and the second trimmed edge (10) are positioned relative to one another and the first component section (7) and the second component section (9) are integrally joined by means of a weld seam (16), **characterized in that** before the producing of weld seam (16) parallel to the first trimmed edge (8) and/or parallel to the second trimmed edge (10) multiple markers (11, 12) are generated at a distance (x) from the trimmed edge (8, 10), wherein the markers (11, 12) are generated during the producing of the trimmed edge (8, 10) and a position check of the weld seam (16) is performed during or after the producing of the weld seam (16) by evaluating the position of the markers (11, 12) relative to the weld seam (16).

2. Method according to claim 1, **characterized in that** a marker (11, 12) is generated by a depression (14), in particular an indentation, in the surface (13) of a component section (7, 9).

3. Method according to claim 1 or 2, **characterized in that** the first trimmed edge (8) of the first component section (7) and the second trimmed edge (10) of the second component section (9) are positioned relative to one another as a butt joint (15).

4. Method according to any one of claims 1 to 3, **characterized in that** the component (1) or a component body of the component (1) is formed from a sheet metal blank.

5. Method according to any one of claims 1 to 4, **characterized in that** the component (1) or a component body of the component (1) is formed frommultiple sheet metal blanks.

6. Method according to any one of claims 1 to 5, **characterized in that** information obtained from the position check of the weld seam (16) is used for an automated seam tracking of the weld seam (16) during the welding process.

## Revendications

1. Procédé de fabrication de composants soudés (1), dans lequel une première section de composant (7) avec un premier bord de rognage (8) et une seconde section de composant (9) avec un second bord de rognage (10) sont générées, après quoi le premier bord de rognage (8) et le second bord de rognage (10) sont positionnés l'un par rapport à l'autre et la première section de composant (7) et la seconde section de composant (9) sont jointes par complémentarité de matière au moyen d'un cordon de soudure (16), **caractérisé en ce que**, avant la fabrication du cordon de soudure (16), plusieurs marqueurs (11, 12) sont générés parallèlement au premier bord de rognage (8) et/ou parallèlement au second bord de rognage (10) à une distance (x) du bord de rognage (8, 10), dans lequel les marqueurs (11, 12) sont générés lors de la fabrication du bord de rognage (8, 10) et, pendant ou après la fabrication du cordon de soudure (16), un contrôle de position du cordon de soudure (16) est réalisé en évaluant la position des marqueurs (11, 12) par rapport au cordon de soudure (16).

2. Procédé selon la revendication 1, **caractérisé en ce qu'**un marqueur (11, 12) est généré par un évidement (14), en particulier une empreinte, dans la surface (13) d'une section de composant (7, 9).

3. Procédé selon la revendication 1 ou 2, **caractérisé en ce que** le premier bord de rognage (8) de la première section de composant (7) et le second bord de rognage (10) de la seconde section de composant (9) sont positionnés l'un par rapport à l'autre avec un joint bord à bord (15).

4. Procédé selon l'une quelconque des revendications 1 à 3, **caractérisé en ce que** le composant (1) ou un corps de composant du composant (1) est formé à partir d'un flan de tôle.

5. Procédé selon l'une quelconque des revendications 1 à 4, **caractérisé en ce que** le composant (1) ou un corps de composant du composant (1) est formé à partir de plusieurs flans de tôle.

6. Procédé selon l'une quelconque des revendications 1 à 5, **caractérisé en ce que** les informations obtenues à partir du contrôle de position du cordon de soudure (16) sont utilisées pour un guidage de cordon automatisé du cordon de soudure (16) pendant le processus de soudage.
